# DEMANDE DE BREVET EUROPEEN

(11) **EP 4 674 242 A1**
(43) Date de publication de la demande: **07.01.2026**
(21) Numéro de dépôt: 25186472.4
(22) Date de dépôt: 30.06.2025
(51) Int. Cl.: A01B 51/02, A01D 46/28, A01D 46/30, B25J 5/00

(54) **PLATEFORME ROBOTIQUE MOBILE, NOTAMMENT DESTINÉE À SE DÉPLACER ENTRE DEUX RANGS DE VIGNES**

(30) Priorité: 02.07.2024 FR 2407176
(71) Demandeur: Exel Industries, 51200 Epernay (FR)
(72) Inventeur: BACLE, Thibault, 69003 LYON (FR); GAUTIER, Jocelyn, 69009 LYON (FR); VIDAL, Vincent, 66750 SAINT CYPRIEN (FR)
(74) Mandataire: Bandpay & Greuter

(57) **Abrégé**

L'invention vise une plateforme robotique (1) mobile comportant quatre roues (2), un châssis (3) creux délimitant une chambre, au moins un plateau (4), disposé au-dessus du châssis (3), ledit plateau (4) délimitant au moins deux régions de réception (41), au moins deux mats (51, 52) reliés au châssis (3), le premier mât (51) saillant du bord du châssis (3) et le deuxième mât (52) saillant du bord opposé ; le premier mât (51) s'étendant dans l'une desdites régions de réception (41) dudit plateau (4) et le deuxième mât (51) s'étendant dans l'autre desdites régions de réception (41) dudit plateau (4) ; ledit plateau (4) étant configuré pour recevoir sur ces régions de réception (41) des chargements fonctionnels assujettis audit plateau (4).

## Description

### DOMAINE TECHNIQUE

La présente invention concerne le domaine des engins agricoles et, en particulier, le domaine des engins agricoles autonomes.

Plus précisément, l'invention a trait à une plateforme robotique mobile destinée à se déplacer entre deux rangs de végétations, notamment de vignes, en particulier entre deux rangs de vignes étroites.

### ETAT DE LA TECHNIQUE

Dans le domaine viticole, les rangs de vignes peuvent présenter un écartement particulièrement restreint, notamment un inter-rang compris entre 0,9 m et 1,3 m, par exemple environ 1,2 m. En outre, il est connu de travailler ou de récolter les fruits de vignes au moyen d'un système enjambeur. Un tel enjambeur peut permettre de traiter, d'entretenir les vignes, ou de récolter le raisin. Dans ce dernier cas, l'enjambeur peut être équipé de façon à secouer les pieds de vignes pour faire tomber les fruits de la vigne puis les transférer vers un conteneur de stockage, au moyen d'un système de transfert. Le conteneur de stockage circule, de manière parallèle au système enjambeur, dans un rang de vignes juxtaposé ou dans des rangs de vignes juxtaposés et le système de transfert s'étend entre le système enjambeur et le conteneur de stockage au-dessus des vignes.

Toutefois, de tels systèmes enjambeurs, couplés aux conteneurs de stockage sont encombrants et mal adaptés aux vignes étroites. Par ailleurs, ces systèmes ne permettent pas le ramassage des raisins par grappes entières, ce qui est notamment obligatoire selon le cahier des charges champenois pour obtenir l'appellation Champagne.

Ainsi, il est connu de procéder au ramassage manuel des grappes de raisins dans les vignes étroites, ce qui présente une contrainte en termes de temps, le ramassage étant chronophage et pénible pour la personne qui doit se baisser, couper la grappe de raisins, se relever et la mettre dans un conteneur, soit qu'il porte sur son dos, soit qui est à proximité dans le rang.

Par ailleurs, il existe des robots de ramassage de fruits, présentant un châssis relié à des roues ou à des chenilles pour permettre son déplacement entre les rangs de végétaux. Sur le châssis, il est disposé un bras robotique configuré pour cueillir les fruits. Parfois, le châssis peut être relié à un chariot configuré pour contenir les fruits une fois cueillis.

Toutefois, ce type de robots de ramassage n'est pas adapté aux vignes étroites, car ils sont trop encombrants et n'est pas non plus adapté à des sols irréguliers présentant par exemple des dévers. En effet, le chariot, tout comme le bras robotique, sont configurés pour opérer sur des sols réguliers et relativement droits.

Ainsi, l'invention vise à résoudre les problèmes susmentionnés en proposant une plateforme robotique modulaire destinée à se déplacer entre des rangs de végétations, en particulier des rangs de vignes étroites, adaptée à des sols irréguliers et en dévers, et permettant à la fois l'entretien des vignes, le ramassage de grappes entières de raisins et le stockage desdites grappes de raisins, de sorte à faciliter, automatiser et réduire le temps et la contrainte du ramassage des grappes de raisins entre des rangs de végétations notamment de vignes, étroits.

### PRESENTATION DE L'INVENTION

Plus précisément, l'invention a pour objet une plateforme robotique mobile destinée à se déplacer entre deux rangs de végétations, notamment de vignes, et s'étendant en longueur selon un axe longitudinal, en largeur selon un axe transversal et en hauteur selon un axe vertical, ladite plateforme comportant quatre roues de déplacement, à savoir deux roues gauches et deux roues droites ; un châssis creux délimitant une chambre, relié aux roues de déplacement, les roues gauches étant placées sur un même bord du châssis et les roues droites étant placées sur un même bord opposé du châssis au bord recevant les roues gauches ; au moins un plateau, disposé au-dessus du châssis, ledit plateau présentant au moins deux régions de réception, à savoir une première région et une deuxième région ; au moins deux mâts reliés au châssis, à savoir un premier mât et un deuxième mât, le premier mât saillant du bord du châssis recevant les deux roues gauches selon l'axe vertical, dans une direction opposée au sol, et le deuxième mât saillant du bord opposé selon l'axe vertical, également dans une direction opposée au sol.

Selon l'invention, le premier mât s'étend dans l'une desdites régions de réception dudit plateau et le deuxième mât s'étend dans l'autre desdites régions de réception dudit plateau ; ledit plateau étant configuré pour recevoir, respectivement sur chacune de ces régions de réception, un chargement fonctionnel, notamment respectivement un conteneur et un bras robotique, lesdits chargements fonctionnels étant assujettis audit plateau.

En particulier, la plateforme robotique est autonome entre les rangs de vignes et permet l'entretien des vignes, le ramassage et/ou le stockage des fruits, à savoir des grappes de raisons, cueillies des vignes. En effet, les roues de déplacement permettent la mobilité de la plateforme robotique entre les vignes, le châssis, et en particulier la chambre du châssis, permet de loger le mécanisme d'entrainement des roues d'entrainement permettant le déplacement de la plateforme robotique. Le plateau disposé au-dessus de la chambre du châssis permet aussi la fixation sur la plateforme d'un conteneur de stockage des fruits ramassés et/ou d'un bras robotique permettant de cueillir les fruits ou l'entretien des vignes par exemple. Chaque région du plateau permet de recevoir ledit conteneur et/ou ledit bras robotique, ou tout autre chargement fonctionnel, comme décrit ci-après. La modularité de la plateforme robotique selon l'invention est ainsi remarquable. Ainsi, le plateau est adaptable au besoin de l'utilisateur, qu'il s'agisse de vendange, d'entretien, etc. De plus, les mâts saillants des deux régions de réception sur des bords longitudinaux et transversaux opposés du châssis, un accès à une première vigne d'un côté de la plateforme robotique mais aussi un accès à une deuxième vigne d'un autre côté de la plateforme robotique sont possibles. Ainsi, la récolte et/ou l'entretien peuvent se faire simultanément sur les deux vignes entre lesquelles la plateforme robotique circule, sans nécessiter une pluralité de passages ou d'allers-retours. Par ailleurs, les mâts étant aptes à dépasser de la végétation des vignes en hauteur, la plateforme est visible par un utilisateur se situant entre des rangs de vignes de ceux entre lesquels circule la plateforme robotique.

Avantageusement, le plateau est amovible sur ledit châssis.

La chambre du châssis permet notamment de loger le mécanisme d'entrainement des roues d'entrainement permettant le déplacement de la plateforme robotique. En ôtant le plateau disposé au-dessus de la chambre, on peut accéder à la chambre et donc au mécanisme d'entrainement.

Avantageusement, le plateau comporte des unités de fixation situées sur chacun des bords du châssis, lesdites unités de fixation étant configurées pour permettre d'assujettir chaque mât au plateau et d'assujettir lesdits chargements fonctionnels sur ledit plateau respectivement dans la première région et la deuxième région.

Les unités de fixation peuvent par exemple comporter des alésages filetés, permettant au moyen d'un système de vis d'assujettir les chargements fonctionnels, notamment le ou les conteneurs sur le plateau et le ou les robots ou bras robotiques, sur le plateau. Ainsi assujettis, les chargements fonctionnels sont reliés fixement à la plateforme robotique et leur chute de la plateforme est empêchée, même sur des sols irréguliers, dans des pentes, etc. Les mâts sont assujettis au plateau par ces unités de fixation. Les unités de fixation permettent alors une configuration adaptable à l'utilisateur.

Avantageusement, la plateforme robotique comporte au moins deux caméras, situées sur le châssis sur un premier bord transversal et sur un deuxième bord transversal dudit châssis.

Les caméras constituent ainsi le système de vision de la plateforme robotique.

Avantageusement, des perforations traversantes sont formées dans la première région et la deuxième région de réception du plateau.

Avantageusement, des ouvertures traversantes sont formées dans la première région et la deuxième région de réception du plateau.

Les ouvertures traversantes peuvent aider à saisir le plateau pour faciliter sa mise en place.

Avantageusement, le châssis présente notamment une largeur selon l'axe transversal maximale de 0,6 m.

Une telle largeur permet d'assurer la circulation de la plateforme robotique dans les vignes étroites.

Avantageusement, chaque mât présente au moins une unité de commande et au moins un mât comporte un indicateur lumineux configuré pour indiquer la localisation de la plateforme robotique.

L'unité de commande permet par exemple l'arrêt de la plateforme robotique. L'utilisateur peut par exemple appuyer sur un bouton d'arrêt d'urgence présent sur le mât, entrainant l'arrêt complet de la plateforme. L'indicateur lumineux, situé en hauteur par rapport au sol sur lequel circule la plateforme robotique et au-dessus de la végétation des vignes, permet à un utilisateur de localiser la plateforme robotique, même lorsqu'elle est en marche entre deux rangs de vignes.

Avantageusement, chaque mât présente une hauteur comprise entre 1,2 m et 1,3 m, permettant notamment de dégager les unités de commande vis-à-vis de la végétation, en particulier de la vigne, et correspondant sensiblement à la hauteur moyenne d'un humain, les unités de commande se trouvant ainsi à une hauteur ergonomique vis-à-vis du sol.

Ainsi, un humain peut accéder au mât et par simple levage de son bras et pression sur un bouton dédié de l'unité de commande permettre l'arrêt d'urgence de la plateforme. De plus, une telle hauteur de mât permet de dégager de la végétation des antennes situées dans une partie supérieure du mât, permettant notamment de capter des signaux radio, satellites, sans obstruction par la végétation de la vigne.

Avantageusement, chaque mât comporte deux portions, à savoir une première portion et une deuxième portion, chaque première portion saillant verticalement le long de l'axe vertical du châssis dans la direction opposée des roues, chaque deuxième portion saillant de la première portion de manière inclinée, en direction du plateau.

Selon un mode de réalisation, la plateforme robotique comprend des poignées, à l'avant et à l'arrière et de chaque côté, aménagées dans des faces latérales du châssis de la plateforme robotique, pour permettre la manipulation de la plateforme robotique.

Selon un mode de réalisation, les mâts sont pliables et peuvent être rabattus vers la plateforme, notamment contre la plateforme. Cela permet de réduire l'encombrement de la plateforme robotique lorsqu'elle n'est pas utilisée, notamment pour son rangement en vue de son transport, par exemple via un véhicule utilitaire.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en perspective de la plateforme robotique objet de l'invention, rendant visible le châssis sur lequel est disposé le plateau et assujettis les deux mâts, diagonalement opposés ;
La figure 2 est une vue de côté de la plateforme robotique de la figure 1 ;
La figure 3 est une vue semblable à celle de la figure 1, sur laquelle un conteneur a été ajouté sur l'une des régions de réception du plateau de la plateforme robotique ;
La figure 4 est une vue semblable à celle de la figure 3, sur laquelle un deuxième conteneur a été ajouté sur l'autre région de réception du plateau de la plateforme robotique ;
La figure 5 est une vue semble à celle de la figure 4, les conteneurs sont ici des caisses ;

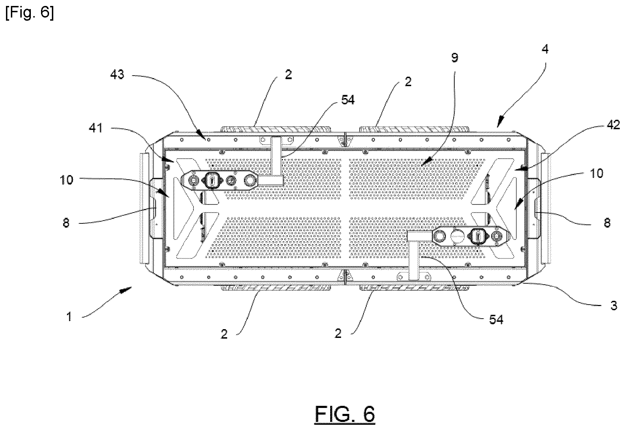

La figure 6 est une vue de dessus de la plateforme robotique de la figure 1 ;

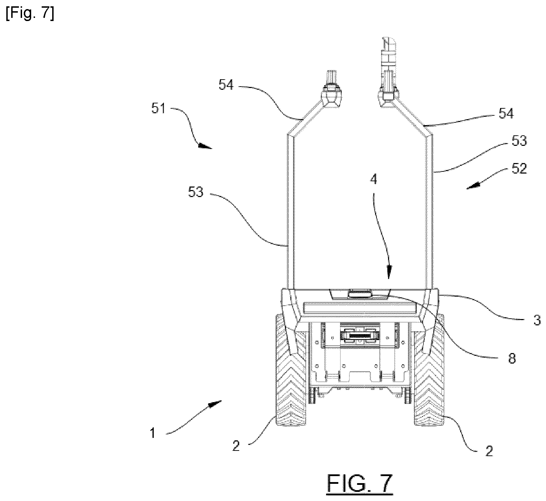

La figure 7 est une vue de devant de la plateforme robotique de la figure 1 rendant visible l'une des caméras de navigation de la plateforme robotique ;
La figure 8 est une vue semblable à celle de la figure 4, dans laquelle un conteneur a été remplacé par un bras robotique ;
La figure 9 est une vue semblable à celle de la figure 8, dans laquelle le conteneur a été remplacé par un autre bras robotique ; et
La figure 10 est une vue semblable à la figure 1, le plateau ayant été enlevé de sorte à rendre visible la chambre délimitée dans le châssis.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne le domaine des engins agricoles et, en particulier le domaine des engins agricoles autonomes.

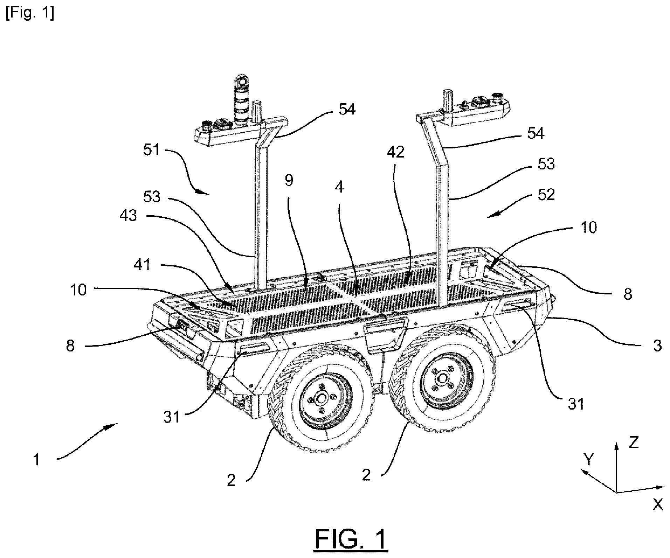

En référence à la figure 1, l'invention concerne en particulier une plateforme robotique 1. La plateforme robotique 1 est mobile et destinée à se déplacer sur le sol, entre deux rangs de vignes.

En particulier, la plateforme robotique 1 est destinée à se déplacer entre deux rangs de vignes étroites.

Il est entendu par vignes étroites des vignes dont les rangs sont espacés les uns des autres notamment de 0,9 m à 1,3 m, par exemple d'environ 1,2 m.

La plateforme robotique 1 s'étend en longueur selon un axe longitudinal X, en largeur selon un axe transversale Y et en hauteur selon un axe vertical Z.

La plateforme robotique 1 comporte quatre roues de déplacement 2. En particulier, la plateforme robotique 1 comporte deux roues gauches et deux roues droites. Les roues de déplacement 2 permettent la mobilité de la plateforme robotique 1 entre les vignes. La dimension des roues est notamment prévue pour permettre l'utilisation de pneumatiques agraires standards adaptés à la vigne et la masse globale de la plateforme robotique 1 est notamment configurée pour permettre d'utiliser ces pneumatiques agraires standards à basse pression, ce qui protège le sol et maximise la stabilité et les capacités de franchissement de la plateforme robotique 1.

La plateforme robotique 1 comporte en outre un châssis 3, au moins un plateau 4 et au moins deux mâts 51, 52.

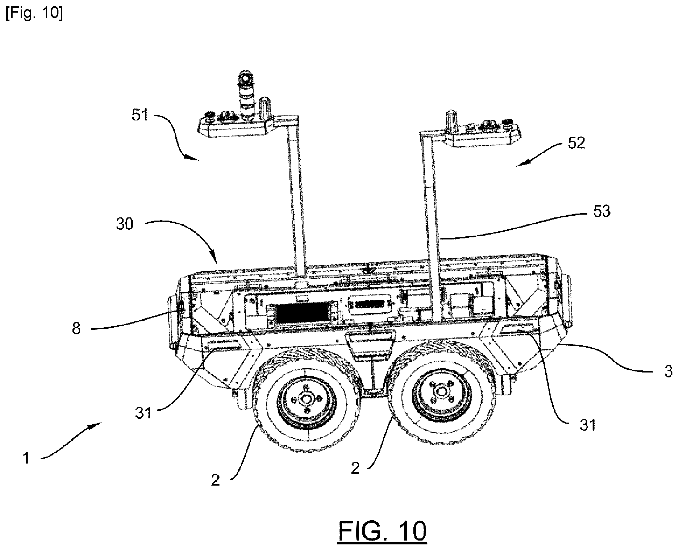

En référence à la figure 10, le châssis 3 est creux et délimite une chambre 30. Le châssis 3 est relié aux quatre roues de déplacement 2. En particulier, les deux roues gauches sont situées sur un même bord du châssis 3 et les deux roues droites sont situées sur un même autre bord du châssis 3, opposé au bord recevant les roues gauches. En référence à la figure 1, les roues gauches et droites sont reliées au châssis 3, respectivement de chaque côté de la plateforme robotique 1.

La chambre 30 du châssis 3 permet de loger un mécanisme d'entrainement des roues 2 de déplacement permettant la mobilité de la plateforme robotique 1 entre les vignes.

Le châssis 3 présente de préférence une largeur selon l'axe transversal Y maximale de 0,6 m. Ainsi, il est compatible avec les vignes étroites. En effet, une telle largeur permet d'assurer la circulation de la plateforme robotique 1 dans les vignes étroites.

En référence à la figure 1, le plateau 4 est amovible sur le châssis 3 et il est disposé au-dessus de la chambre 30 du châssis 3.

Le plateau 4 mis en position au-dessus de la chambre 30, peut permettre d'empêcher l'accès au mécanisme d'entrainement de la plateforme robotique 1. Au contraire, laisser libre l'accès à la chambre 30 du châssis 3 en ôtant le plateau 4 peut permettre d'accéder au mécanisme d'entrainement et par exemple permet aisément son entretien.

En particulier, le plateau 4 présente la forme d'une plaque s'étendant longitudinalement. Le plateau 4 délimite ici deux régions de réception 41, 42, à savoir une première région de réception 41 et une deuxième région de réception 42.

Dans l'exemple représenté sur les figures, la première région de réception 41 et la deuxième région de réception 42 présentent les mêmes dimensions.

Il est évident que la première région de réception 41 et la deuxième région de réception 42 peuvent présenter des dimensions différentes.

Selon un mode de réalisation non représenté, le plateau 4 peut comporter davantage de régions de réception sur sa longueur.

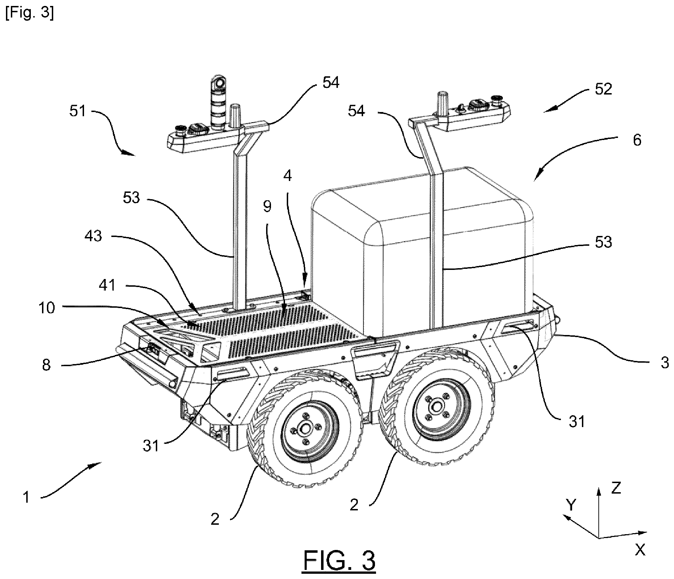

Tel que représenté sur les figures 3, 4, 5, 8 et 9, le plateau 4 est configuré pour recevoir sur ces régions de réception 41, 42, un conteneur 6 et/ou un robot ou un bras robotique 7. Le conteneur 6, le robot ou le bras robotique 7 sont assujettis sur le plateau 4. Il va de soi que le conteneur 6, le robot ou le bras robotique 7 dont il est question ici et dans la suite de la description qui suit s'entendent comme des exemples de chargements fonctionnels susceptibles d'être reçus sur le plateau 4. Par « chargement fonctionnel », on entend une charge utile, ayant en particulier une fonction spécifique dans le contexte de la plateforme robotique objet de la présente invention. D'autres chargements fonctionnels peuvent être mis en place sur les régions de réception 41, 42 respectives, et sont interchangeables, permettant d'augmenter la modularité de la plateforme robotique.

En outre, la plateforme robotique 1 selon l'invention est en particulier prévue pour fonctionner entre deux rangs de vignes. Toutefois, elle peut aussi bien être utilisée entre deux rangs de végétations autres que des vignes. La plateforme robotique 1 selon l'invention peut aussi tout à fait être utilisée en champ libre. L'utilisation de la plateforme robotique selon l'invention est toutefois particulièrement avantageuse dans le cas de rangs de vignes et encore plus spécifiquement dans le cas de vignes étroites.

Ainsi, le plateau 4 mis en position au-dessus de la chambre 30, permet d'empêcher l'accès au mécanisme d'entrainement.

De plus, le plateau 4 peut comporter des unités de fixation 43. Les unités de fixation 43 sont situées sur chacun des bords longitudinaux du châssis 3. Les unités de fixation 43 sont configurées pour permettre d'assujettir chaque mât 51, 52 au plateau 4 et d'assujettir lesdits conteneurs 6 et/ou bras robotiques 7 sur le plateau 4 respectivement dans la première région 41 et la deuxième région 42.

Dans le mode de réalisation représenté sur les figures, les unités de fixation 43 peuvent par exemple comporter des alésages filetés, permettant au moyen d'un système de vis d'assujettir le ou les conteneurs 6 sur le plateau 4 et le ou les bras robotiques 7 ou bras robotique sur le plateau 4. Ainsi assujettis, le conteneur 6 et/ou le bras robotique 7 est relié fixement à la plateforme robotique 1 et sa chute de la plateforme 1 est empêchée, même sur des sols irréguliers, dans des pentes, etc.

De plus, des perforations traversantes 9 peuvent être formées dans la première région 41 et/ou la deuxième région 42 de réception du plateau 4.

Les perforations traversantes 9 peuvent aider à la saisie du plateau 4 pour sa mise en place. En outre, ces perforations traversantes 9 permettent également, le cas échéant, l'écoulement de jus de raisin et d'éviter son accumulation sur le plateau 4.

De plus, des ouvertures 10 traversantes peuvent être formées dans la première région 41 et/ou la deuxième région 42 de réception du plateau 4.

Les ouvertures 10 permettent de saisir le plateau 4. Ainsi, au travers de ces ouvertures 10, le plateau 4 peut être mis en place de sorte à venir au-dessus de la chambre 30 ou au contraire, le plateau 4 peut être ôté de sorte à ouvrir la chambre 30 du châssis 3.

En référence à la figure 1, les deux mâts 51, 52 sont reliés au châssis 3. En particulier, un premier mât 51 saille du châssis 3, verticalement, selon l'axe Z, dans la direction opposée des roues de déplacement 2 et un deuxième mât saille du châssis 3, verticalement, selon l'axe Z, dans la direction opposée des roues de déplacement 2. Le premier mât 51 et le deuxième mât 52 saillent chacun de l'un des bords longitudinaux du châssis 3.

En particulier, le premier mât 51 s'étend dans la première région de réception 41 ou dans la deuxième région de réception 42 du plateau 4 et le deuxième mât 52 s'étend dans l'autre des régions de réception 42, 41 du plateau 4. En d'autres termes, les premier et deuxième mâts 51, 52 saillent des deux régions de réception 41, 42 sur des bords longitudinaux et transversaux opposés du châssis 3. Le premier mât 51 et le deuxième mât 52 sont diagonalement opposés.

Les mâts 51, 52 sont assujettis au plateau 4 par ses unités de fixation 43. Les unités de fixation 43 permettent alors une configuration adaptable à l'utilisateur.

La disposition des mâts 51, 52 sur le plateau 4 permet un accès à une première vigne d'un côté transversal de la plateforme robotique 1 mais aussi un accès à une deuxième vigne d'un autre côté transversal de la plateforme robotique 1. Ainsi, la récolte et/ou l'entretien peut se faire simultanément sur les deux vignes entre lesquelles la plateforme robotique 1 circule, sans nécessiter une pluralité de passages ou d'allers-retours. Par ailleurs, les mâts 51, 52 saillants de la végétation des vignes en hauteur, permettent un accès à la plateforme 1 par un utilisateur se situant entre les rangs de vignes, directement juxtaposés des rangs de vignes entre lesquels circule la plateforme robotique 1.

En référence aux figures, chaque mât 51, 52 peut présenter au moins une unité de commande et au moins un indicateur lumineux configuré pour indiquer la localisation de la plateforme robotique 1.

L'unité de commande permet par exemple l'arrêt de la plateforme robotique 1. L'utilisateur peut par exemple appuyer sur un bouton d'arrêt d'urgence présent sur le mât 51, 52, entrainant l'arrêt complet de la plateforme 1. L'indicateur lumineux, situé en hauteur par rapport au sol sur lequel circule la plateforme robotique 1 et au-dessus de la végétation des vignes, permet à un utilisateur de localiser la plateforme robotique 1, même lorsqu'elle est en marche entre deux rangs de vignes.

De plus, chaque mât 51, 52 présente une hauteur correspondant à la hauteur moyenne d'un humain. Ainsi, un humain peut accéder au mât 51, 52 et par simple levage de son bras et pression sur l'unité de commande permettre l'arrêt d'urgence de la plateforme 1. De plus, une telle hauteur de mât 51, 52 permet de dégager de la végétation des antennes situées dans une partie supérieure du mât 51, 52, permettant notamment de capter des signaux radio, satellites.

Selon un mode de réalisation, chaque mât 51, 52 comporte deux portions, à savoir une première portion 53 et une deuxième portion 54, chaque première portion 53 saillant verticalement le long de l'axe vertical Z du châssis 3 dans la direction opposée au sol, et donc également l'opposée des roues 2 qui reposent sur le sol. Chaque deuxième portion 54 saille de la première portion 53 de manière inclinée, en direction du plateau 4. Chaque deuxième portion permet en particulier de supporter l'unité de commande pour chaque mât 51, 52.

Cette inclinaison des portions respectives 54 des mâts 51, 52 permet de recentrer au maximum des boutons d'arrêt d'urgence présents sur les unités de commande, sans pour autant empiéter sur la surface de chargement du plateau 4 et sans gêner la pose ou la saisie et l'emport d'un conteneur 6, par le côté par exemple. Cela permet également d'éloigner les unités de commande vis-à-vis du sol en cas de basculement de la plateforme robotique 1 sur un flanc.

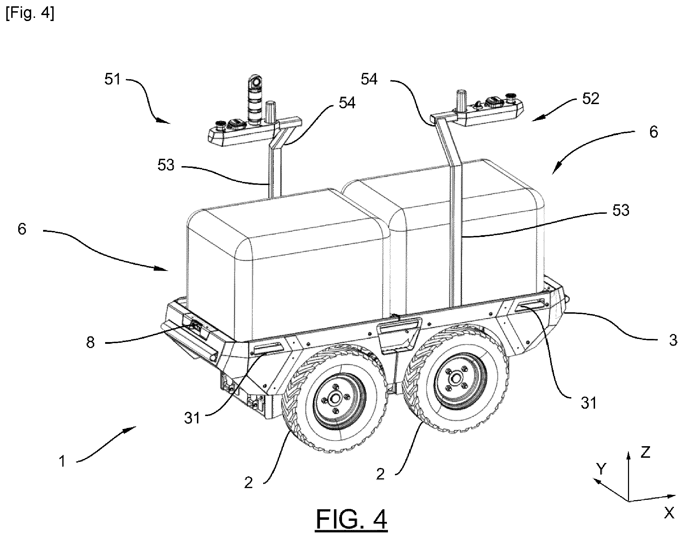

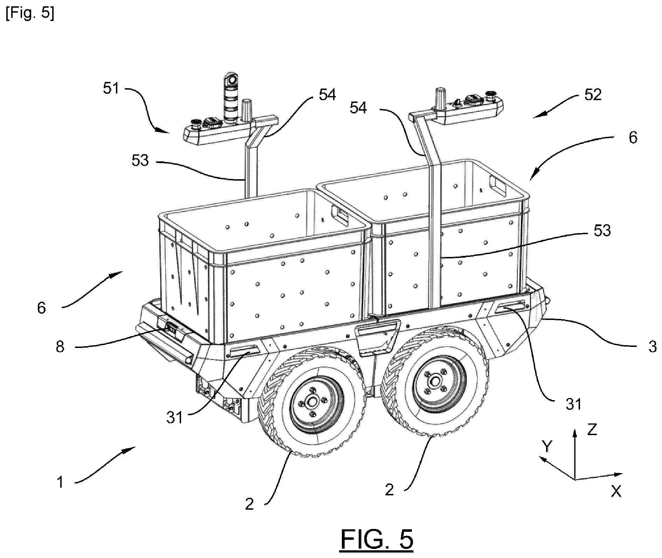

En référence aux figures 4 et 5, la plateforme robotique 1 peut permettre le transport de deux conteneurs 6, un conteneur 6 sur chacune des régions de réception 41, 42 du plateau 4. Une telle configuration permet une collaboration entre la plateforme robotique 1 et un ou plusieurs utilisateurs. En effet, l'utilisateur ramasse les grappes des vignes et les entrepose dans les conteneurs 6, la plateforme robotique 1 s'occupe alors du stockage et du transport des grappes cueillies le long des vignes. La disposition des mâts 51, 52 autorise la dépose des grappes dans les conteneurs 6 disposés sur la plateforme robotique 1, aussi bien depuis l'avant, que depuis l'arrière ou depuis chaque côté de la plateforme.

En outre, selon un mode de réalisation non représenté, les mâts 51, 52 sont pliables et peuvent être rabattus vers la plateforme 4, notamment contre la plateforme 4. Une fois les mâts rabattus, la plateforme robotique présente un encombrement réduit et peut ainsi plus facilement être transportée, notamment en étant logée dans un véhicule utilitaire. Par exemple, les mâts 51, 52 peuvent être assujettis au plateau 4 par des unités de fixation adaptées de telle sorte que les mâts soient pliables vers la plateforme. Les unités de fixation 43 sont par exemple des liaisons pivots qui peuvent être bloquées durant l'utilisation effective de la plateforme robotique 1 et débloquées, autorisant de ce fait de rabattre les mâts 51, 52 contre la plateforme robotique 1, lorsque celle-ci n'est pas utilisée et doit être rangée, notamment logée dans un véhicule utilitaire.

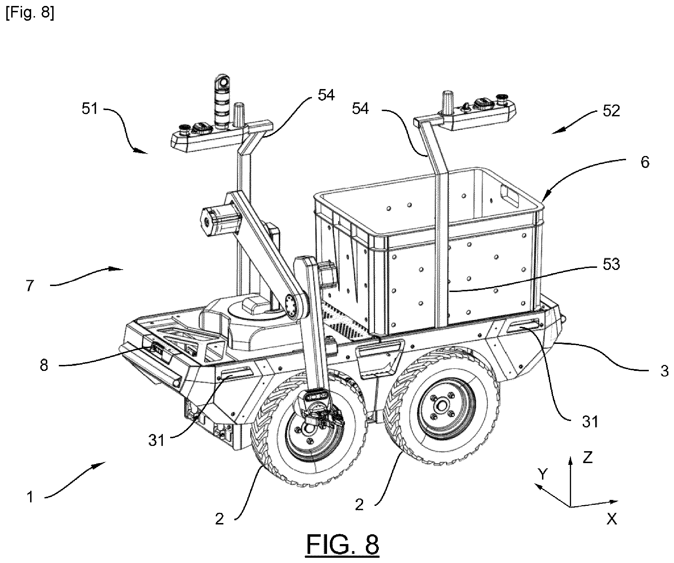

En référence à la figure 8, un bras robotique 7 peut être assujetti sur la première portion de réception 41 du plateau 4 et un conteneur 6 peut être assujetti sur la deuxième portion de réception 42 du plateau 4. Le bras robotique 7 peut par exemple comprendre un sécateur et/ou un préhenseur, permettant de récupérer les grappes sur les vignes, puis les entreposer dans le conteneur 6. Ainsi, une telle configuration permet un ramassage et un transport autonome des grappes de raisins sur l'ensemble de la vigne.

Selon un mode de réalisation, le bras robotique 7 peut être équipé d'un préhenseur permettant de saisir des conteneurs 6 disposés sur le sol et de les transférer sur le plateau 4. Ainsi, avec une telle configuration, la plateforme robotique 1 permettrait le ramassage de conteneurs 6 puis leur transport.

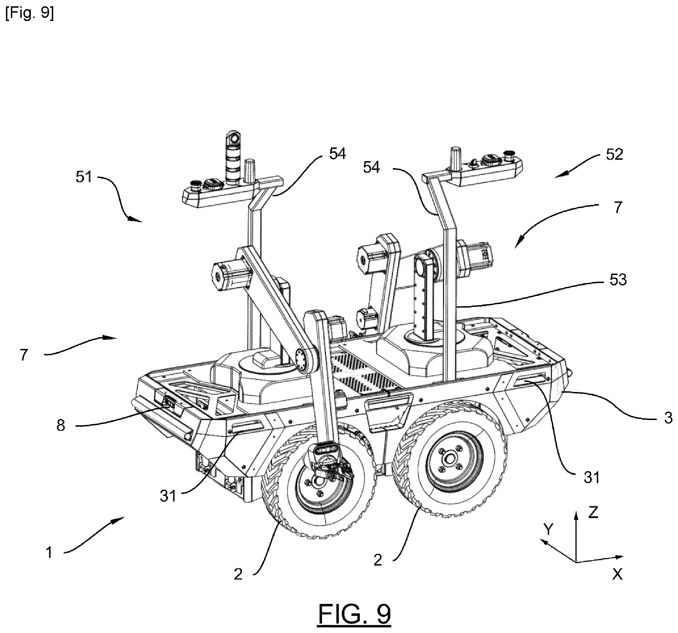

En référence à la figure 9, un bras robotique 7 peut être assujetti sur la première portion de réception 41 du plateau 4 et un autre bras robotique 7 peut être assujetti sur la deuxième portion de réception 42 du plateau 4. Une telle configuration permet l'entretien de deux vignes juxtaposées de manière autonome et simultanément.

Il est évident qu'une pluralité de combinaisons de configurations sont possibles et qu'il n'en est ici listé qu'une partie. Il peut être envisagé divers chargements fonctionnels, notamment divers bras robotiques, permettant la récolte, l'entretien sur le rang ou inter-rang, et/ou le ramassage de conteneurs 6 associés à un autre bras robotique 7 similaire ou différent, c'est-à-dire présentant d'autres fonctionnalités. Il peut aussi être envisagé de combiner l'un quelconque des bras robotiques 7 possibles avec un conteneur 6, de sorte à permettre à un utilisateur un nombre varié de tâches et donc de s'adapter au mieux à son besoin.

Les conteneurs 6 sont en particulier des caisses standards de vendange viticole. Lorsqu'une première région de réception reçoit une telle caisse standard de vendange viticole, la plateforme robotique selon l'invention embarque alors un module de transport de caisse standard de vendange viticole. Si l'autre région de réception du plateau 4 reçoit un bras robotique de ramassage apte à saisir et déposer le conteneur sur la première région de réception, alors la plateforme robotique selon l'invention embarque alors un module de ramassage de caisses standards de vendange viticole.

Une région de réception du plateau 4 peut être équipée d'un bras robotique 7 comportant un sécateur/préhenseur de taille. Dans ce cas, il est dit que la plateforme robotique selon l'invention embarque un module robotique d'entretien de rang de vignes.

Une région de réception du plateau 4 peut être équipée d'un bras robotique 7 comportant un sécateur/préhenseur de récolte. Dans ce cas, la plateforme robotique selon l'invention embarque un module robotique de récolte.

Une région de réception du plateau 4 peut être équipée d'un bras robotique 7 comportant un outil d'épamprage. Dans ce cas, la plateforme robotique selon l'invention embarque un module robotique d'épamprage.

Une région de réception du plateau 4 peut être équipée d'un système de broyage de végétaux. Dans ce cas, la plateforme robotique selon l'invention embarque un module de broyage de végétaux.

Une région de réception du plateau 4 peut être équipée d'un système de relevage/porte-outil. Dans ce cas, la plateforme robotique selon l'invention embarque un module de relevage/porte-outil.

Une région de réception du plateau 4 peut recevoir une ou plusieurs batteries additionnelles. Dans ce cas, la plateforme robotique selon l'invention embarque un module de batterie(s) additionnelle(s).

Ces différents modules peuvent être librement combinés entre eux pour obtenir de nombreuses configurations. Par exemple, dans une configuration « transport collaboratif », la plateforme robotique peut embarquer deux modules de transport, autrement dit deux conteneurs 6, notamment deux caisses standards de vendange viticole, chaque conteneur 6 étant reçu sur une région de réception respective, tandis que, de chaque côté de la plateforme, un humain récolte le raisin pour le déposer dans l'un des conteneurs, le plus accessible pour lui, la plateforme robotique étant par ailleurs configurée pour se déplacer de sorte à accompagner le déplacement des humains récoltants.

Dans une configuration « transport et ramassage de caisse », la plateforme robotique peut être équipée de modules de ramassage de caisses standards de vendange viticole.

Dans une configuration « récolte autonome », la plateforme robotique est équipée d'un module robotique de récolte et d'un module de transport de caisse standard de vendange viticole.

Dans une configuration « récolte et déchargement autonome », la plateforme robotique est équipée d'un module robotique de récolte et d'un module de ramassage de caisses standards de vendange viticole.

Dans une configuration « taille autonome », la plateforme robotique est équipée de deux modules robotiques d'entretien de rang de vignes, notamment travaillant en parallèle sur les rangs situés de part et d'autre de la plateforme robotique.

Dans une configuration « taille et broyage autonome », la plateforme robotique est équipée d'un module robotique d'entretien de rang de vignes et d'un module de broyage de végétaux.

Dans une configuration « entretien inter-rang autonome », la plateforme robotique est équipée d'un module de relevage/porte-outil et d'un module de batterie(s) additionnelle(s).

Tous les exemples ci-dessus sont donnés à titre illustratif et démontrent la modularité de la plateforme robotique selon l'invention.

La plateforme robotique 1 peut en outre comporter au moins deux caméras 8, situées sur le châssis 3 sur un premier bord transversal et sur un deuxième bord transversal. Les caméras 8 constituent le système de vision de la plateforme robotique 1.

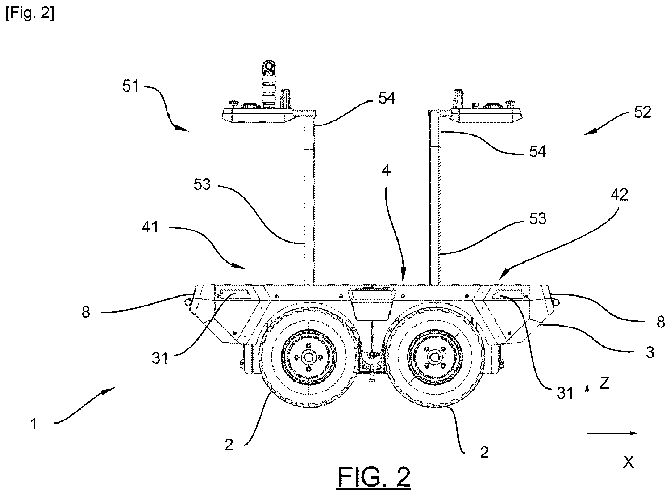

En outre, comme cela est visible sur les figures 1 à 5 et 8 à 10, la plateforme robotique 1 peut comprendre des poignées 31, à l'avant et à l'arrière et de chaque côté, aménagées dans des faces latérales du châssis 3 de la plateforme robotique 1, pour permettre la manipulation de la plateforme robotique 1. Cela permet par exemple à des utilisateurs de manipuler la plateforme robotique 1 afin de l'aider dans des situations difficiles (pente, creux, dévers, etc.).

Les poignées 31 peuvent se présenter sous la forme d'ouvertures latérales prévues dans des capots formant les faces latérales fermant le châssis 3 de la plateforme robotique 1.

Une interface électrique comprenant des connecteurs électriques peut être prévue au niveau du châssis pour permettre la connexion électrique et la communication avec des chargements fonctionnels et/ou des batteries additionnelles externes, afin de les relier électriquement à des équipements ou à un module distributeur de puissance électrique logé dans le châssis ainsi que pour permettre l'échange de mesures ou de commandes avec un contrôleur principal également logé dans le châssis.

On notera par ailleurs que l'invention n'est pas limitée aux modes de réalisation décrit précédemment. Il apparaîtra en effet à l'homme du métier que diverses modifications peuvent être apportées au mode de réalisation décrit ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en oeuvre de l'enseignement qui vient de lui être divulgué.

## Revendications

1. Plateforme robotique (1) modulaire mobile destinée à se déplacer sur le sol entre deux rangs de végétations, notamment de vignes, et s'étendant en longueur selon un axe longitudinal (X), en largeur selon un axe transversal (Y) et en hauteur selon un axe vertical (Z), ladite plateforme (1) comportant :
- quatre roues de déplacement (2), à savoir deux roues gauches et deux roues droites ;
- un châssis (3) creux délimitant une chambre (30), relié aux roues de déplacement (2), les roues gauches étant placées sur un même bord du châssis (3) et les roues droites étant placées sur un même bord du châssis (3) opposé au bord recevant les roues gauches ;
- au moins un plateau (4), disposé au-dessus du châssis (3), ledit plateau (4) délimitant au moins deux régions de réception (41, 42), à savoir une première région (41) et une deuxième région (42) ;
- au moins deux mâts (51, 52) reliés au châssis (3), à savoir un premier mât (51) et un deuxième mât (52), le premier mât (51) saillant du bord du châssis (3) recevant les deux roues gauches selon l'axe vertical (Z), dans une direction opposée au sol, et le deuxième mât (52) saillant du bord opposé selon l'axe vertical (Z), également dans une direction opposée au sol ;
le premier mât (51) s'étendant dans l'une desdites régions de réception (41 ; 42) dudit plateau (4) et le deuxième mât (51) s'étendant dans l'autre desdites régions de réception (42 ; 41) dudit plateau (4) ;
ledit plateau (4) étant configuré pour recevoir, respectivement sur chacune de ces régions de réception (41, 42), un chargement fonctionnel, notamment respectivement un conteneur (6) et/ou un bras robotique (7), lesdits chargements fonctionnels étant assujettis audit plateau (4), la plateforme robotique étant **caractérisée en ce que** chaque mât (51, 52) présente au moins une unité de commande et au moins un mât comporte un indicateur lumineux configuré pour indiquer la localisation de la plateforme robotique (1).

2. Plateforme robotique (1) selon la revendication 1, dans laquelle le plateau (4) est amovible sur ledit châssis (3).

3. Plateforme robotique (1) selon l'une des revendications 1 à 2, dans laquelle le plateau (4) comporte des unités de fixation (43) situées sur chacun des bords du châssis (3), lesdites unités de fixation (43) étant configurées pour permettre d'assujettir chaque mât (51, 52) au plateau (4) et d'assujettir lesdits chargements fonctionnels sur ledit plateau (4) respectivement dans la première région (41) et la deuxième région (42).

4. Plateforme robotique (1) selon l'une des revendications 1 à 3, comportant au moins deux caméras (8), situées sur le châssis (3) sur un premier bord transversal et sur un deuxième bord transversal dudit châssis (3).

5. Plateforme robotique (1) selon l'une des revendications 1 à 4, dans laquelle des perforations traversantes (9) sont formées dans la première région (41) et la deuxième région (42) de réception du plateau (4).

6. Plateforme robotique (1) selon l'une des revendications 1 à 5, dans laquelle des ouvertures (10) traversantes sont formées dans la première région (41) et la deuxième région (42) de réception du plateau (4).

7. Plateforme robotique (1) selon l'une des revendications 1 à 6, dans laquelle le châssis (3) présente une largeur selon l'axe transversal (Y) maximale de 0,6 m.

8. Plateforme robotique (1) selon l'une des revendications 1 à 7, dans laquelle chaque mât (51, 52) présente une hauteur correspondant à la hauteur moyenne d'un humain.

9. Plateforme robotique (1) selon l'une des revendications 1 à 8, dans laquelle chaque mât (51, 52) comporte deux portions, à savoir une première portion (53) et une deuxième portion (54), chaque première portion (53) saillant verticalement le long de l'axe vertical (Z) du châssis (3) dans la direction opposée des roues (2), chaque deuxième portion (54) saillant de la première portion (53) de manière inclinée, en direction du plateau (4).

10. Plateforme robotique (1) selon l'une des revendications 1 à 9, comprenant des poignées (31), à l'avant et à l'arrière et de chaque côté, aménagées dans des faces latérales du châssis (3) de la plateforme robotique (1), pour permettre la manipulation de la plateforme robotique (1).

11. Plateforme robotique (1) selon l'une des revendications 1 à 10, dans laquelle une région de réception est configurée pour recevoir un conteneur (6) et une région de réception reçoit un bras robotique (7).

12. Plateforme robotique (1) selon l'une des revendications 1 à 11, dans laquelle les mâts (51, 52) sont pliables et peuvent être rabattus vers la plateforme (4), notamment contre la plateforme (4).
